Europäisches Patentamt

European Patent Office

Office européen des brevets

(11) Numéro de publication : **0 618 432 A2**

(12) **DEMANDE DE BREVET EUROPEEN**

(21) Numéro de dépôt : **94400703.8**

(22) Date de dépôt : **31.03.94**

(51) Int. Cl.$^5$ : **G01J 5/60**

(30) Priorité : **01.04.93 FR 9303848**

(43) Date de publication de la demande :
**05.10.94 Bulletin 94/40**

(84) Etats contractants désignés :
**AT BE CH DE DK ES FR GB IE IT LI NL SE**

(71) Demandeur : **EUROPEAN GAS TURBINES SA**
**38, avenue Kléber**
**F-75116 Paris (FR)**

(72) Inventeur : **Fally, Jacques**
**4, allée Francois Villon**
**F-91400 Orsay (FR)**

(74) Mandataire : **Fournier, Michel et al**
**SOSPI**
**14-16, rue de la Baume**
**F-75008 Paris (FR)**

(54) **Pyromètre bichromatique.**

(57)     Pyromètre bichromatique pour la détection de la température élevée d'un élément de surface d'un objet, comprenant deux photodiodes (18, 19) recevant le rayonnement de l'objet, chacune à large bande interdite et sensible au rayonnement dans un domaine de longueurs d'onde donné, ces domaines de sensibilité étant différents,

et situés dans le visible ou proches du visible, et étant obtenu par le choix de la valeur de la bande interdite du matériau constitutif de chacune des photodiodes (18) et (19), qui est supérieure ou égale à celle du silicium ($\geqq 1{,}11e$ V).

Détermination de la température de surfaces rapidement évolutives avec une grande précision.

La présente invention concerne un pyromètre bichromatique de détection de la température élevée d'un élément de surface d'un objet, comprenant :

a) un élément optique de captage du rayonnement émis par l'élément de surface,

b) un système de fibres optiques de transmission du rayonnement capté à deux photodiodes, chacune à large bande interdite et sensible au rayonnement dans un domaine de longueurs d'onde donné, ces domaines de sensibilité étant différents,

c) en aval de chacune de ces photodiodes et en parallèle, des moyens pour transmettre les signaux électriques résultant des énergies lumineuses reçues par l'une et l'autre des photodiodes, et des moyens pour enregistrer ces signaux électriques.

Elle s'applique plus particulièrement, mais non exclusivement, à la mesure des températures d'aubes de turbines à gaz à grande vitesse de rotation, ces turbines pouvant être des turbines industrielles ou des turbines d'aviation.

On a déjà mesuré la température élevée d'éléments de surface de turbines à grande vitesse de rotation à l'aide de pyromètres monochromatiques, fonctionnant en général dans l'infrarouge; ceux-ci ne donnent toutefois que des indications de température très imprécises, fortement influencées par la valeur de l'émissivité des surfaces à observer, généralement inconnue et variable dans le temps, ainsi que par les obscurcissements du hublot d'observation et par des réflexions parasites de rayonnement de flamme, de sorte que les températures d'aubes de turbines dans le domaine de 800°C à 900°C ne sont connues qu'avec une marge d'erreur pouvant atteindre une centaine de °C.

On a également proposé d'effectuer la mesure de la température d'aubes de turbines en déterminant le rapport des luminances reçues par deux photodiodes. Selon le document GB-A-2183038, le rayonnement émis par une aube de turbine est transmis à une première photodiode au silicium, sensible à un rayonnement de longueurs d'onde allant de 0,4 à 1,05 micromètre, et laissant passer en totalité ou partiellement un rayonnement de longueurs d'onde de 0,8 à 1,8 micromètre, vers une seconde photodiode à l'arséniure d'indium et de gallium. On obtient ainsi la température d'aubes de turbine avec une meilleure précision, mais un calcul d'erreur sur la valeur du rapport des luminances transmises sur la base de la formule approchée de Wien montre que l'erreur sur la température à partir des valeurs mesurées est égale à la somme d'un premier terme correspondant à l'erreur sur la mesure des luminances et d'un terme correspondant à l'erreur sur la variation de l'émissivité entre les longueurs d'onde opératoires équivalentes des deux photodiodes, ces deux termes comportent en numérateur le produit de ces deux longueurs d'onde, et le premier comportant en dénominateur la différence de ces deux longueurs d'onde. Pour réduire ces termes d'erreur, il serait très avantageux d'utiliser des photodiodes sensibles à de faibles longueurs d'onde, et de choisir les deux longueurs d'onde aussi différentes que possible. Il est toutefois très difficile d'effectuer les mesures sur des photodiodes sensibles à de faibles longueurs d'onde, car l'émittance du corps noir ou de corps gris est d'autant plus faible aux températures les plus courantes que l'on utilise des courtes longueurs d'onde notamment dans le visible (ainsi que le montre la loi de PLANCK), et que les amplificateurs connus à gain très élevé ont une bande passante faible et un niveau de bruit élevé.

La présente invention a pour but de procurer un pyromètre optique bichromatique qui permette de déterminer la température élevée de la surface d'un objet avec une marge d'erreur ne dépassant pas quelques °C, et si nécessaire d'effectuer des mesures successives à cadence élevée sur la surface d'objets en déplacement rapide, tels que des aubes de turbines.

Le pyromètre bichromatique selon l'invention est caractérisé en ce que la bande interdite du matériau semiconducteur de l'une des photodiodes est supérieure à celle de l'autre, elle-même supérieure ou égale à celle du silicium.

On sait par ailleurs que la longueur d'onde de coupure d'un matériau semiconducteur $\lambda$c(longueur d'onde au-dessus de laquelle il n'absorbe plus un rayonnement électromagnétique) et sa longueur d'onde équivalente $\lambda$ éq(voisine de la longueur d'onde du maximum de la réponse spectrale) sont définies en fonction de la bande interdite Eg par les relations

$\lambda$c (micromètres) = 1,24/Eg(électron - volts)
et $\lambda$ éq voisine de 0,8 $\lambda$c

Il en résulte que la longueur d'onde de coupure du matériau de la première photodiode et sa longueur d'onde équivalente sont inférieures à celles du silicium, tandis que les longueurs d'onde correspondantes du matériau de la seconde photodiode sont inférieures ou égales à celles du silicium.

Ainsi, la bande interdite du silicium étant de 1,11 eV, sa longueur d'onde de coupure est de 1,12 micromètre et sa longueur d'onde équivalente de 0,924 micromètre.

On utilisera donc par exemple pour l'une des photodiodes un matériau de bande interdite notablement plus élevée que 1,11eV, et de longueur d'onde de coupure et de longueur d'onde équivalente notablement inférieures à 1,12 micromètres et 0,924 micromètre. On pourrait également utiliser deux photodiodes caractérisées par des bandes interdites supérieures à 1,11eV.

Le choix des matériaux des photodiodes dépendra en pratique de l'application envisagée, notamment de la cadence des mesures à réaliser sur une émission variant à fréquence élevée et du domaine de température d'émission de la surface, par exemple la mesure à fréquence élevée de la température d'aubes de turbines industrielles, de température voisine de 850°C, ou d'aubes de turbines d'aviation, de température pouvant atteindre 11OO°C, ou la mesure à faible fréquence de la température de fours (qui est pratiquement stable).

En particulier, pour les mesures de température variant à fréquence élevée, avec une cadence de mesure de l'ordre de 5 microsecondes, de la température d'éléments de surface à température élevée, voisine de 850°C, tels que divers points d'aubes de turbines industrielles passant dans le faisceau optique étudié par le pyromètre, on utilisera pour transmettre les signaux électriques émis par les photodiodes des amplificateurs de courant à gain élevé (supérieur ou égal à $10^6$ V/A) et à bande passante d'au moins 10 KHz.

Pour la mesure de la température de points d'aubes de turbines d'aviation, de température de l'ordre de 1100°C, on pourra utiliser par exemple une photodiode au phosphure de gallium, de bande interdite 2,22eV, et de longueurs d'onde de coupure O,556 micromètre et de longueur d'onde équivalente O,45 micromètres, l'autre photodiode pouvant être au silicium.

Pour la mesure de la température de surface d'objets statiques ou des mesures à basse fréquence (moins de 1 KHZ), il n'est pas nécessaire de disposer après les photodiodes des amplificateurs à gain élevé, et l'on peut les remplacer par des résistance de charge élevées.

Le système de fibres optiques de transmission du rayonnement capté peut comprendre une fibre optique de diamètre relativement élevé (par exemple : diamètre de coeur = 1mm), reliant l'élément optique de captage à un coupleur en Y, et des fibres optiques de même diamètre en parallèle pour transmission du rayonnement divisé par le coupleur à chacune des photodiodes. Il peut aussi comporter un faisceau de fibres optiques en parallèle, subdivisé en deux demi-faisceaux dont chacun est relié à une photodiode. Il peut enfin comprendre une optique ou un faisceau unique de fibres optiques reliant l'élément optique de captage à une première photodiode, absorbant une partie du rayonnement à plus courte longueur d'onde et laissant passer celui-ci dans un autre domaine de longueurs d'onde à une seconde photodiode, absorbant le rayonnement transmis.

Les moyens pour enregistrer les signaux électriques émis par les photodiodes et les amplificateurs, dans le cas de la mesure de températures à fréquence élevée, seront constitués de préférence par une carte électronique d'acquisition rapide et synchronisée et de stockage de ces signaux.

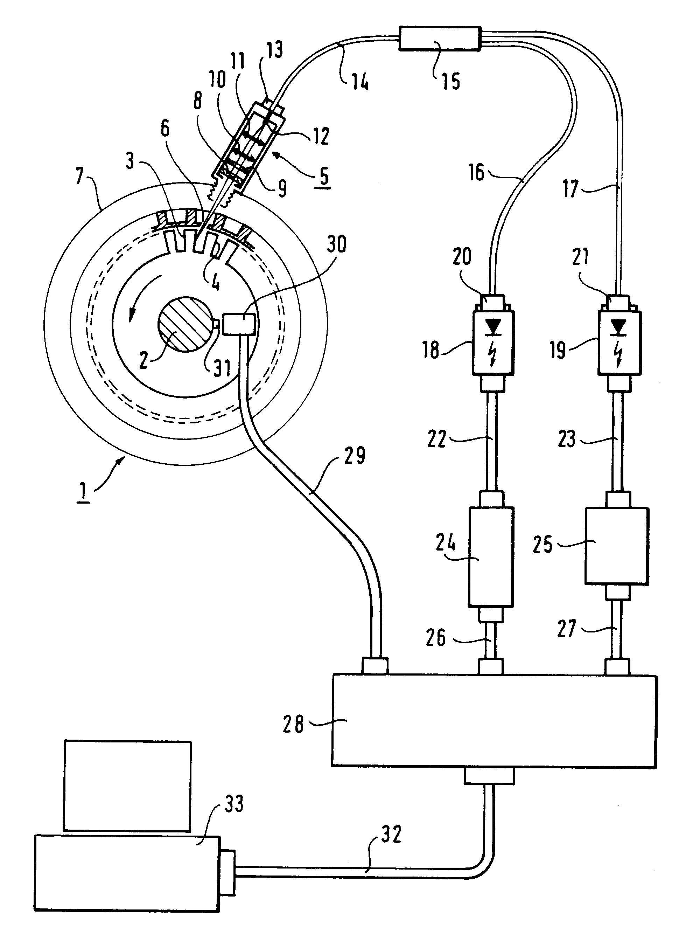

Il est décrit ci-après, à titre d'exemple et en référence à la figure unique schématique du dessin annexé, un pyromètre bichromatique rapide à courtes longueurs d'onde pour la mesure à fréquence élevée de la température de points successifs d'aubes de turbines à gaz.

Le pyromètre est destiné à enregistrer la température de différents points de la surface d'aubes d'entrée (ou aubes de l'étage haute pression) telles que 3, 4 d'une turbine à gaz 1, représentée en coupe perpendiculaire à l'axe de la turbine, à fréquence très élevée, compte tenu de la grande vitesse de rotation (environ 5 100 tours/min) de l'arbre 2 de la turbine (les aubes d'entrée présentant les températures superficielles les plus élevées, de l'ordre de 850°C).

A cet effet, la visée d'une tête optique 5 s'effectue à travers un orifice 6, traversant la partie statorique 7 de la turbine vers une surface élémentaire de quelques $mm^2$ d'une aube de la turbine. L'angle de l'axe de visée avec le rayon de la turbine passant par le point de mesure dans le plan de la figure doit être compris entre 25° et 30°, de façon à permettre une mesure jusqu'à proximité du fond des aubes. La tête optique 5 comporte un hublot en saphir 8 avec joint d'étanchéité, un diaphragme 9, une lentille 10, un condenseur 11 et une entrée de fibre optique 12 à travers un connecteur 13.

La fibre optique 14 transmet le rayonnement lumineux à un coupleur optique en Y (15), équilibré à 50-50 %. De ce coupleur partent en parallèle des fibres optiques 16 et 17 vers des photodiodes 18, 19, montées dans des boîtiers blindés, munis à l'entrée de connecteurs 20, 21.

La photodiode de gauche 18 sur la figure est par ex : une photodiode rapide "PIN" au silicium, de bande interdite 1,11eV. Sa longueur d'onde de coupure, conformément à l'expression classique, a pour valeur 1,12 micromètre (1,24/1,11) et sa longueur-d'onde équivalente est d'environ O,924 micromètre. La photodiode de droite est par ex. une photodiode au phosphure d'arsenic et de gallium, à sensibilité étendue vers le rouge, de bande interdite voisine de 1,75eV, de longueur d'onde de coupure O,76 micromètre et de longueur d'onde équivalente O,686 micromètre. De telles photodiodes sont disponibles dans le commerce.

D'autres matériaux présentent des bandes interdites encore plus élevées, par ex. le phosphure d'arsenic et de gallium à sensibilité limitée au visible ou le phosphure de gallium, mais leurs longueurs d'onde équivalentes sont encore plus faibles, et du fait de la distribution spectrale de l'émittance du corps noir (ou en pratique d'un corps gris) en fonction de la température donnée par la loi de Planck, l'on disposerait de trop peu d'énergie dans cette application pour une mesure correcte avec les amplificateurs disponibles sur le marché.

Des photodiodes en de tels matériaux pourraient cependant convenir pour des mesures de températures encore plus élevées, supérieures à 1100°C., avec des bandes de fréquence de l'ordre de 30 KHz.

En aval des photodiodes, des connexions 22 et 23 les relient à des amplificateurs de courant 24, 25 à gain élevé, de l'ordre de $10^7$ à $10^8$ V/A, et à bande passante d'au moins 10 KHz, qui sont disponibles dans le commerce.

Les amplificateurs de courant 24, 25 sont reliés par des connexions 26, 27 à une carte d'acquisition synchrone rapide et de stockage de données 28.

Celle-ci est également reliée par une voie de connexion 29, pour permettre une identification des points des aubes visés au cours de l'enregistrement, à un détecteur de position 30, sensible au passage d'un repère 31 solidaire de l'arbre de la turbine.

La carte d'acquisition et de stockage est elle-même reliée par une connexion 32 à un ordinateur 33, muni d'un logiciel de contrôle et d'un logiciel de calcul et de présentation.

Un tel pyromètre permet de mesurer à grande vitesse la température d'une succession de points d'aubes de turbine à gaz (par ex 2500 mesures/tour de la turbine) à partir de 700°C et avec une précision de ± 3°C, sur des aubes d'émissivité comprise entre O,15 et O,9, avec une bande passante de 10 KHz. Des mesures expérimentales sur des cibles fixes en alliage "Nimonic" ont montré que la température de l'objet était une fonction linéaire du logarithme du rapport des tensions respectivement délivrées par les amplificateurs 25 et 24; ce qui correspond à la théorie du phénomène. Si l'on se contente de mesures statiques, il n'est plus nécessaire de disposer les amplificateurs en aval des photodiodes. On peut les remplacer par de simples résistances de charge élevées (par ex.500 kΩ).

**Revendications**

1) Pyromètre bichromatique pour la détection de la température élevée d'un élément de surface d'un objet, comprenant

a) un élément optique (5) de captage du rayonnement émis par l'élément de surface,

b) un système (14, 15, 16, 17) de fibres optiques de transmission du rayonnement capté à deux photodiodes (18, 19), chacune en un matériau semiconducteur de large bande interdite et sensible au rayonnement dans un domaine de longueurs d'onde donné, ces domaines de sensibilité étant différents,

c) en aval de chacune de ces photodiodes et en parallèle, des moyens (22, 24; 23, 25) pour transmettre les signaux électriques résultant des énergies lumineuses reçues par l'une et l'autre des photodiodes, et des moyens (28, 33) pour enregistrer ces signaux électriques,

caractérisé en ce que la bande interdite du matériau semiconducteur de l'une des photodiodes (19) est supérieure à celle de l'autre (18), elle-même supérieure ou égale à celle du silicium.

2) Pyromètre bichromatique selon la revendication 1, caractérisé en ce que le système de fibres optiques de transmission du rayonnement capté comprend une fibre optique de diamètre relativement élevé (14), un coupleur en Y (15) et deux fibres optiques en parallèle (16, 17) de transmssion du rayonnement divisé par le coupleur à chacune des photodiodes.

3) Pyromètre bichromatique selon les revendications 1 ou 2, pour la mesure à fréquence élevée, de la température d'éléments de surface à température élevée voisine de 850°C, caractérisé en ce que les moyens pour transmettre les signaux électriques émis par l'une ou l'autre des photodiodes comprennent des amplificateurs de courant (24, 25) à gain élevé ( $\geqq 10^6$ V/A) et à bande passante d'au moins 10 KHz.

4) Pyromètre bichromatique selon l'une des revendications 1 à 3, caractérisé en ce que les moyens pour enregistrer les signaux électriques résultant des énergies absorbées par les photodiodes comportent une carte électronique (28) d'acquisition synchrone rapide et de stockage de ces signaux.

5) Pyromètre bichromatique selon les revendications 3 ou 4, caractérisé en ce que l'une des photodiodes (18) est une photodiode rapide "PIN" au silicium, de longueur d'onde équivalente voisine de O,924 micron, et l'autre (19) une photodiode au phosphure d'arsenic et de gallium de longueur d'onde équivalente voisine de O,686 micron.

6) Pyromètre bichromatique selon les revendications 1 ou 2, pour la détection à fréquence élevée de la température d'éléments de surface à température très élevée, supérieure à 1100° C, caractérisé en ce que la photodiode correspondant à la longueur d'onde la plus faible est une photodiode au phosphure de gallium de longueur d'onde équivalente voisine de O,45 micron.

7) Pyromètre bichromatique selon les revendications 1 ou 2, pour la détection de température d'objets statiques, caractérisé en ce que les moyens pour transformer en impulsions électriques les énergies lumineuses reçues par l'une ou l'autre des photodiodes comprennent des résistances de charge élevées.